# EUROPEAN PATENT APPLICATION

(11) **EP 2 439 470 A1**
(43) Date of publication of application: **11.04.2012**
(21) Application number: 11161982.1
(22) Date of filing: 12.04.2011
(51) Int. Cl.: F25B 41/06, F16K 11/074, F16K 31/04

(54) **Electric valve for refrigerant control**

(30) Priority: 05.10.2010 KR 20100096791
(71) Applicant: Jahwa Electronics Co., Ltd., Chungbuk (KR)
(72) Inventor: Kang, Sin Il, Chungbuk (KR)
(74) Representative: Collin, Jérôme

(57) **Abstract**

The present invention relates to an electric valve for refrigerant control including: a base; a cover (20) adapted to cover the base; a rotor (30) adapted to perform stepping motions in a rotating direction by means of a stator disposed outside the cover (20); and a drive pad (90) rotated by receiving a rotating force from the rotor (30) through decelerating gears (60,70,80) , wherein the base has a first port (14) through which a refrigerant is introduced to the space inside the cover (20) and at least two or more second ports (13a,13b) through which the refrigerant introduced through the first port (14) is discharged, and the drive pad (90) has a contact surface contacted with the surface of the base and an open surface stepped from the contact surface and forming a passage extended to the second ports in accordance with the operation of the drive pad (90).

## Description

### Field of the Invention

The present invention relates to an electric valve for refrigerant control, and more particularly, to an electric valve for refrigerant control that is applied to a refrigerator or a small-sized freezer so as to adjust refrigerant flow or to selectively control the direction of the refrigerant flow.

### Background of the Related Art

A refrigerating (freezing) device like a refrigerator (a freezer) adopts an expansion valve as one of necessary parts thereof so as to perform a refrigerating (freezing) cycle. Generally, the expansion valve serves to reduce the pressure of a low-temperature and high-pressure refrigerant flowing from a receiver tank in a cycle of a freezer or a heat pump and to discharge the reduced pressure of refrigerant to an evaporator.

The expansion valve adopted in the conventional refrigerating (freezing) cycle has a variety of structures, and among them, especially, an electric expansion valve having a stepping motor for the control of the refrigerant flow is well known. Advantageously, the electric expansion valve is compact in the structure, controls the refrigerant flow in a precise manner, and provides high energy efficiency. Accordingly, the electric expansion valve is used widely in the fields wherein a refrigerating (freezing) cycle is adopted like small-sized refrigerators (freezers).

The conventional electric expansion valve adopting the stepping motor is configured wherein ports through which a refrigerant continuously flows are opened and closed according to the rotation of a magnet (rotor), thereby adjusting refrigerant flow.

In this configuration, however, the size and position of a drive pad are limited in accordance with the magnitude of the rotating force of the magnet. That is, if the area of the drive pad is large, frictional load becomes increased, such that the rotating force of the magnet should be increased. On the other hand, a valve sheet made of an expensive abrasion-resistant resin may be adopted to solve the above problem, but in this case, the cost of the product is unavoidably raised.

Also, there has been proposed Korean Patent No.835259 entitled "Multi-directional electric expansion valve" and filed by the same applicant as this invention, wherein the electric expansion valve is provided with a plurality of decelerating gears. In more detail, through the decelerating gears, the number of rotations transmitted from the stepping motor to the valve sheet is decreased and the rotation torque is increased, thereby solving the above-mentioned problem.

The configuration of the conventional multi-directional electric expansion valve will be explained in more detail with reference to the accompanying drawings.

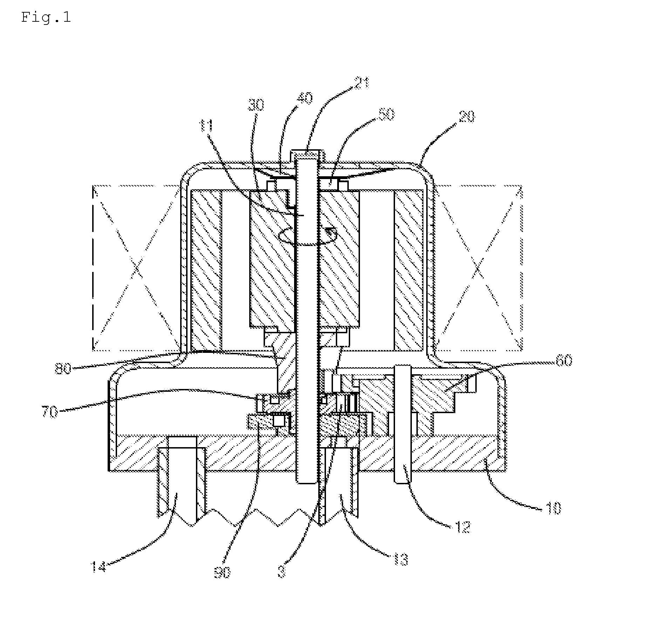

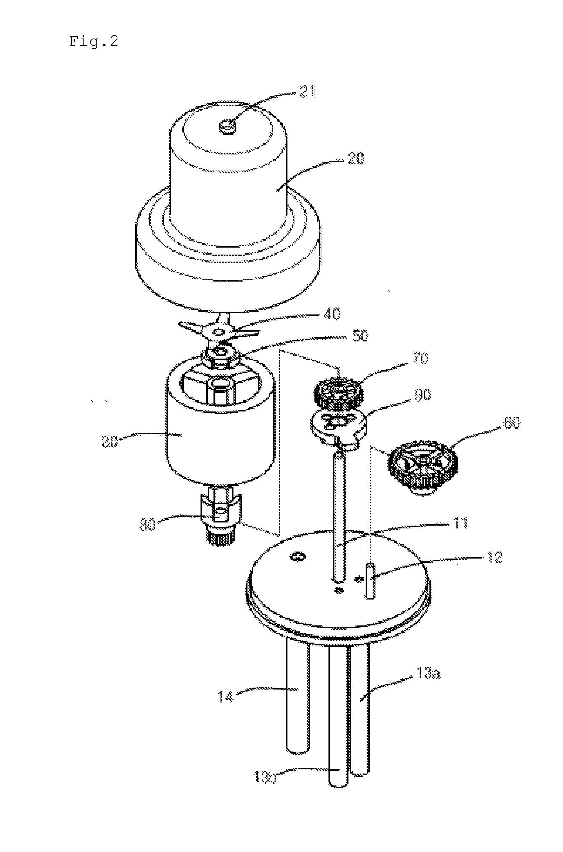

FIGS.1 and 2 are an assembled sectional view and an exploded perspective view showing the conventional multi-directional electric expansion valve.

Referring to FIGS.1 and 2, the multi-directional electric expansion valve is provided with a base 10. The base 10 includes two fixing shafts 11 and 12, and a plurality of outlet pipes 13a and 13b and an inlet pipe 14 each adapted to flow a refrigerant therethrough. The base 10 is coupled to a cover 20, so that an internal space sealed between the base 10 and the cover 20 is formed.

A magnet 30 from which a substantial rotary force is generated is mounted inside the cover 20 and generates a rotating force therefrom. The magnet 30 is rotatably mounted at the fixing shaft 11 by means of elastic means 40 and 50, and the rotating force generated from the magnet 30 (which is called 'rotor') is transmitted to a drive pad 90 through a decelerator including first, second and third gears 60, 70, and 80. With the rotating force received from the decelerator, the drive pad 90 adjusts the opening and closing of a passage extended from the fixing shaft 11 to the outlet pipes 13a and 13b.

A reference numeral 40 which has not been described yet in FIGS.1 and 2 denotes a spring adapted to prevent the gap on the magnet 30 from being formed, and a reference numeral 50 denotes a washer disposed between the magnet 30 and the spring 40.

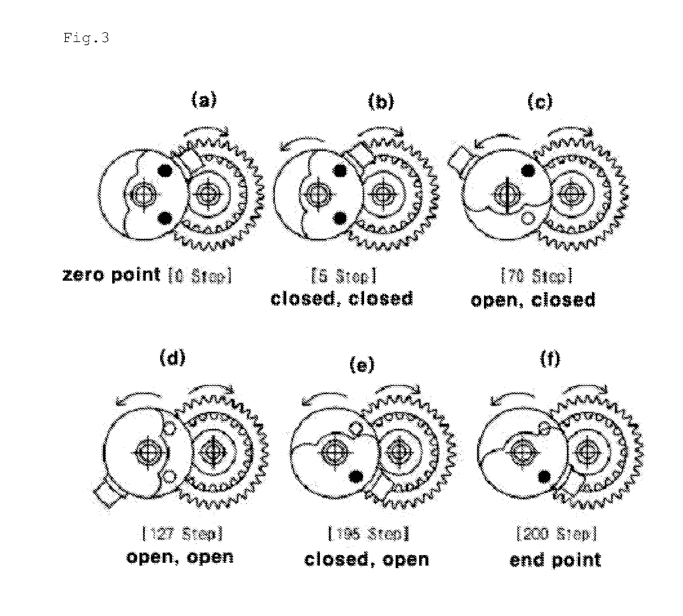

FIG.3 is a sectional view showing different control cases of the opening and closing of the outlet pipes carried out by the conventional electric expansion valve, wherein when the two outlet pipes 13a and 13b are formed, that is, when two refrigerating (freezing) chambers are formed, the operating states of the drive pad 90 are illustrated. In FIG.3, a black point indicates that an outlet (which is extended to the outlet pipe) is in a closed state, and a white point the outlet is in an opened state.

Referring to FIG.3, a case 'A' indicates an initial zero state of the drive pad 90. The initial zero state of the drive pad 90 like the case 'A' means that the drive pad 90 is rotated clockwise in a state of being engaged with the third gear 60, such that a stopper 91 extended from the drive pad 90 is brought into contact with the shaft extended from the third gear 60 and is not further rotated.

The initial zero state is automatically set by means of a microcomputer (a control unit) when initial power is inputted to activate the refrigerator (freezer). In more detail, if the initial power is inputted, an electrical signal that is adequate to allow a stepping motor to be moved along the whole steps is generated from the microcomputer, and accordingly, the drive pad 90 can be returned to its initial zero state like the case 'A' even though it is placed at any position before the driving.

Cases 'B', 'C', 'D', and 'E' in FIG.3 show that the two outlets are all opened or closed and any one outlet is selectively opened in accordance with the operations of the drive pad 90 caused by the stepping motions of the stepping motor. As appreciated from the cases, in case of the expansion valve wherein the outlets from which the refrigerant is discharged are formed on two positions, the opening and closing of the two outlets can be adjusted like the cases 'B', 'C', 'D', and 'E' in FIG.3.

The configuration of the conventional electric expansion valve adopts a control system wherein plural refrigerating (freezing) chambers are at the same time activated as plural outlets (ports) are at the same time opened. Accordingly, so as to adjust the opening and closing of the outlets in accordance with the number of control ports, that is, the number of outlets controlled in the opening and closing operations by means of the drive pad, a variety of cases as mentioned above are needed.

That is, if the outlets are two as shown in FIG.3, the above-mentioned four cases are needed, and if the outlets are three, which is not shown in the drawings, eight cases are needed. In the control system wherein the plural outlets are at the same time opened, therefore, the number of cases 2^{x} (X is the number of outlets) is increased in proportion to the number of outlets.

So as to provide the control system wherein the plural outlets are at the same time opened, accordingly, the shape of the drive pad becomes complicated in proportion to the number of outlets, and further, the control itself becomes hard. Moreover, since the number of control cases should be inputted at an initial step, it is hard to perform initial setting of the system. Additionally, as the control becomes complicated in accordance with the increases of the number of control cases, the precise control is not performed well for the opening and closing of the outlets, thereby causing frequent control failure.

### SUMMARY OF THE INVENTION

Accordingly, the present invention has been made in view of the above-mentioned problems occurring in the prior art, and it is an object of the present invention to provide an electric valve for refrigerant control that is capable of greatly reducing the number of control cases, thereby allowing the configuration of the valve to be simplified and improving the control precision.

To accomplish the above object, according to the present invention, there is provided an electric valve for refrigerant control including: a base; a cover adapted to cover the base; a rotor disposed inside the cover and adapted to perform stepping motions in a rotating direction by means of a stator disposed outside the cover; and a drive pad rotated by receiving a rotating force from the rotor through decelerating gears, wherein the base has a first port through which a refrigerant is introduced to the space inside the cover and at least two or more second ports through which the refrigerant introduced through the first port is discharged, and the drive pad has a contact surface contacted with the surface of the base and closing the second ports and an open surface stepped from the contact surface and forming a passage extended to the second ports in accordance with the operation of the drive pad.

According to the present invention, desirably, the second ports are formed around the axial line (center line) of the base coverable by the drive pad, and the first port is formed on the base spaced apart from the drive pad by a predetermined distance.

According to the present invention, desirably, the second ports are two, and they are formed spaced apart from each other with a predetermined phase difference in a range between 120° and 180° on the axial line of the base.

According to the present invention, desirably, the second ports are three, and they are spaced apart from each other with a phase difference in a range between 90° and 150° on the axial line of the base.

According to the present invention, desirably, the open surface of the drive pad has an area adequate to open the second ports one by one as the drive pad is rotated.

According to the present invention, desirably, the drive pad has a stopper mounted on a predetermined portion of the outer periphery thereof so as to limit the rotational range thereof.

According to the present invention, desirably, the drive pad is rotated clockwise or counterclockwise by 1.5° per one step by means of the rotor so as to open and close the second ports one by one.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is an assembled sectional view showing a conventional electric expansion valve;

FIG.2 is an exploded perspective view showing the conventional electric expansion valve of FIG.1;

FIG.3 is a sectional view showing different cases of the opening and closing of the outlet pipes carried out by the conventional electric expansion valve as shown in FIGS.1 and 2;

FIG.4 is an enlarged plan view showing the main parts of an electric valve for refrigerant control according to a first embodiment of the present invention;

FIG.5 is a perspective view showing a drive pad of FIG.4;

FIG.6 is a sectional view showing the line A-A of FIG.5;

FIG.7 is a sectional view showing different operating cases in FIG.4;

FIG.8 is an enlarged plan view showing the main parts of an electric valve for refrigerant control according to a second embodiment of the present invention; and

FIG.9 is a sectional view showing different operating cases in FIG.8.

### DETAILED DESCRIPTION OF THE PREFERRED EMBODIMENT

Hereinafter, an explanation on an electric valve for refrigerant control according to the preferred embodiments of the present invention will be in detail given with reference to the attached drawing. In the description of the invention, the parts corresponding to those of FIGS.1 and 2 are indicated by corresponding reference numerals, and therefore, the same drawings as the conventional drawings are not given hereinafter.

In the same manner as shown in FIGS.1 and 2, an electric valve for refrigerant control according to the preferred embodiments of the present invention includes a base 10 and a cover 20 adapted to cover the base 10. The base 10 has two fixing shafts 11 and 12 mounted thereon in parallel relation with each other so as to rotatably mount parts disposed inside the cover 20 therealong. The fixing shaft 11 fitted along the center of the base 10 has a rotor 30, decelerating gears 60, 70 and 80, and a drive pad 90, which are rotatably fitted therearound.

In the state of being rotatably fitted around the fixing shaft 11, the rotor 30 performs the stepping motions in a rotating direction at a predetermined angle set by a stator (which is not shown) disposed outside the cover 20, and the stepping motions performed by the rotor 30 are transmitted to the drive pad 90 through the decelerating gears 60, 70, and 80.

In more detail, the third decelerating gear 60 is rotatably fitted around another fixing shaft 12, and in this state, it is engaged with the first decelerating gear 80 and the second decelerating gear 70 that are rotatably fitted around the fixing shaft 11 disposed at the center of the base 10. Also, the second decelerating gear 70 is coupled to the drive pad 90 fitted around the fixing shaft 11 through the protrusion and groove formed on each other, thereby making it possible to transmit the power to the drive pad 90.

Accordingly, if the rotor 30 performs the stepping motions by a predetermined angle in the rotating direction, the rotating force generated from the stepping motions is transmitted to the third decelerating gear 60 through the first decelerating gear 80, and then, it is transmitted to the second decelerating gear 70 via the third decelerating gear 60. As mentioned above, moreover, since the second decelerating gear 70 is coupled to the drive pad 90 fitted around the fixing shaft 11 through the protrusion and groove formed on each other, the rotation caused by the stepping motions of the rotor 30 is gently transmitted to the drive pad 90.

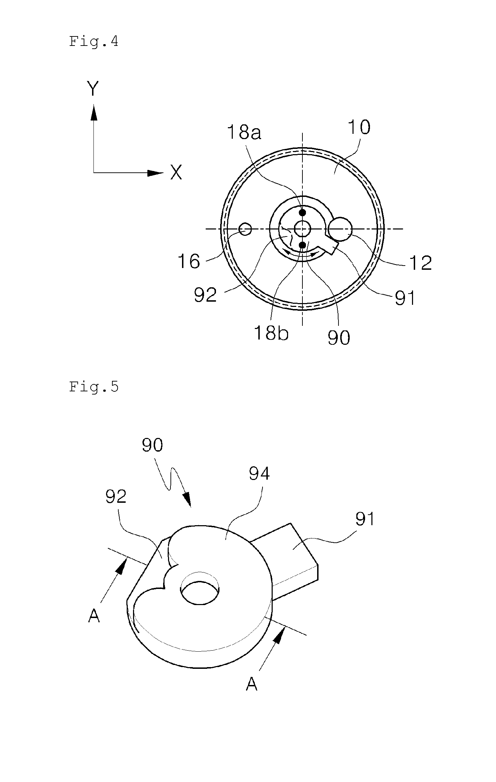

FIG.4 is an enlarged plan view showing the main parts of an electric valve for refrigerant control according to a first embodiment of the present invention, wherein two ports (second ports) are formed on the base 10.

Referring to FIG.4, the base 10 has a first port 16 and second ports 18a and 18b formed thereon. The first port 16 serves to introduce a refrigerant to the closed internal space formed at the time of being coupled to the cover 20, and the second ports 18a and 18b serve to discharge the refrigerant introduced through the first port 16 therethrough. At this time, the second ports 18a and 18b are formed around the axial line (center line) of the base 10 coverable by the drive pad 90, and the first port 16 is formed on the base 10 spaced apart from the drive pad 90 by a predetermined distance.

As shown in FIG. 4, the second ports 18a and 18b are formed spaced apart from each other with a predetermined phase difference on the axial line of the base 10. In the drawings, the two ports 18a and 18b are spaced apart from each other with a phase difference of 180° on the axis Y. However, the present invention is not limited thereto, but if the two ports 18a and 18b are spaced apart from each other with the range of phase difference (for example, in a range between 120° and 180°) such that they are opened one by one by means of an open surface 92 of the drive pad 90 as will be discussed later during the rotation of the drive pad 90, there is no specific limitation thereon.

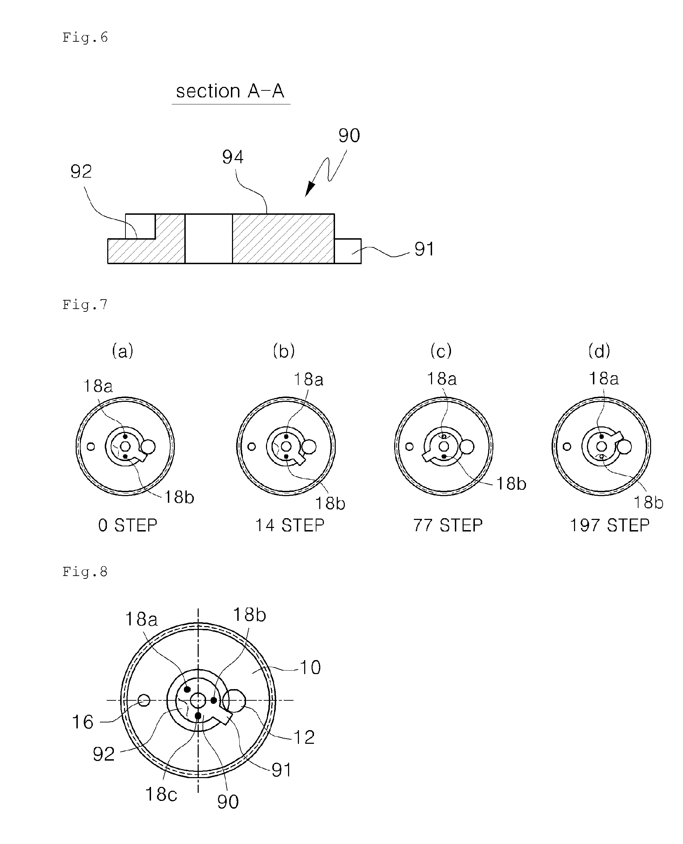

FIG.5 is a perspective view showing a drive pad of FIG.4, and FIG.6 is a sectional view showing the line A-A of FIG.5.

Referring to FIGS. 5 and 6, the drive pad 90 adopted in the embodiment of the present invention includes a contact surface 94 and the open surface 92 stepped from the contact surface 94. The contact surface 94 is brought into contact with the top surface of the base 10 and closes the second ports 18a and 18b, and the open surface 92 forms a passage extended from the outside of the drive pad 90 to the second ports 18a and 18b when it is positioned on the second ports 18a and 18b during the rotation of the drive pad 90.

As the drive pad 90 is rotated, according to the present invention, the open surface 92 of the drive pad 90 opens the second ports 18a and 18b one by one, thereby forming the passage extended from the outside of the drive pad 90 to the opened second port 18a or 18b. If the open surface 92 has an area adequate to form the passage, therefore, there is no specific limitation on the shape of the open surface 92. The drive pad 90 has a stopper 91 mounted on a predetermined portion of the outer periphery thereof so as to limit the rotational range thereof.

So as to open and close the second ports 18a and 18b one by one, the drive pad 90 is rotated clockwise or counterclockwise by 1.5° per one step by means of the rotor 30, and when the drive pad 90 is rotated by a predetermined angle, the open surface 92 is positioned at the point of one of the second ports 18a and 18b, such that the second ports 18a and 18b are opened and closed one by one.

FIG.7 is a sectional view showing different cases of opening and closing operations of the second ports in FIG.4. In case where the two second ports 18a and 18b are formed like the present invention, that is, in case of providing two refrigerating (freezing) chambers, the operating states of the drive pad 90 are illustrated.

In FIG.7, a black point indicates that the second ports are in a closed state, and a white point they are in an opened state.

Referring to FIG.7, a case 'A' indicates an initial zero state of the drive pad 90. The initial zero state of the drive pad 90 like the case 'A' means that the drive pad 90 is not rotated any more because the stopper 91 extended from the drive pad 90 is locked to the second fixing shaft 12.

The initial zero state is automatically set by means of a microcomputer (a control unit) when initial power is inputted to activate the refrigerator (freezer). In the initial state, if the drive pad 90 is rotated counterclockwise by 14 steps (by 21°) like a case 'B' of FIG.7, the two second ports 18a and 18b are all closed, thereby stopping the supply of refrigerant to the two chambers.

A case 'C' of FIG.7 indicates that the drive pad is rotated counterclockwise by 77 steps (by 115.5°) from the initial zero state, and in this case, only the second port 18a positioned at the upper side of the second port 18b is opened. A case 'D' of FIG.7 indicates that the drive pad 90 is rotated counterclockwise by 197 steps (by 295.5°) from the initial zero state, and in this case, only the second port 18b positioned at the lower side of the second port 18a is opened.

If any one port of the two ports is opened like the cases 'C' and 'D' of FIG.7, only the refrigerating (freezing) chamber connected to the opened port can be activated by receiving the refrigerant from the opened port.

According to the first embodiment of the present invention, in case of the electric valve having the two second ports 18a and 18b formed on the base 10, the opening and closing of the second ports 18a and 18b are controlled one by one in accordance with the movements of the open surface 92 of the drive pad 90 through the rotation of the drive pad 90. Accordingly, the refrigerant flow can be controlled with the control cases 'B', 'C', and 'D' of FIG.7. That is, the number of control cases for the refrigerant flow can be remarkably reduced when compared with the conventional practice.

On the other hand, FIG.8 is an enlarged plan view showing the main parts of an electric valve for refrigerant control according to a second embodiment of the present invention, wherein the configuration is the same as the first embodiment of the present invention except that three outlet ports (the second ports) are formed on the base. Therefore, an explanation on the same configuration and parts as the first embodiment of the present invention will be not given hereinafter, for the brevity of the description.

Referring to FIG.8, according to the second embodiment of the present invention, three second ports are formed spaced apart from each other with a predetermined phase difference on the axial line of the base 10. In the figure, three second ports 18a, 18b, and 18c are spaced apart from each other with a phase difference in a range between 90° and 150° on the axial line of the base 10. However, the present invention is not limited thereto, but if the three second ports 18a, 18b, and 18c are spaced apart from each other with the range of a predetermined phase difference such that they are opened one by one by means of the open surface 92 of the drive pad 90 during the rotation of the drive pad 90, there is no specific limitation thereon.

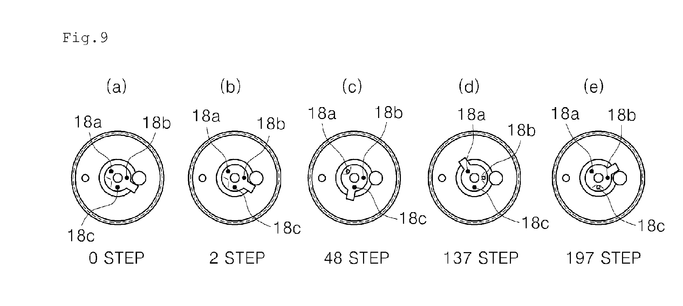

FIG.9 is a sectional view showing different cases of opening and closing operations of the second ports in FIG.8. In case where the three second ports 18a, 18b, and 18c are formed like the present invention, that is, in case of providing three refrigerating (freezing) chambers, the operating states of the drive pad 90 are illustrated.

In the same manner as FIG. 7, in FIG.9, a black point indicates that the second ports are in a closed state, and a white point they are in an opened state.

Referring to FIG.9, a case 'A' indicates an initial zero state of the drive pad 90. The initial zero state is automatically set by means of a microcomputer (a control unit) when initial power is inputted to activate the refrigerator (freezer). In the initial state, if the drive pad 90 is rotated counterclockwise by 2 steps (by 3°) like a case 'B' of FIG.9, the three second ports 18a, 18b, and 18c are all closed by means of the contact surface 94 of the drive pad 90, thereby stopping the supply of refrigerant to the three chambers.

Cases 'C', 'D', and 'E' of FIG.9 indicate that the drive pad 90 is rotated counterclockwise by 48 steps (by 72°), 137 steps (205.5°), and 197 steps (295.5°) from the initial zero state, and in this case, the three second ports 18a, 18b, and 18c are opened one by one counterclockwise. Like this, if only one of the three ports is opened, only the refrigerating (freezing) chamber connected to the opened port can be activated by receiving the refrigerant from the opened port.

According to the second embodiment of the present invention, in case of the electric valve having the three second ports 18a, 18b, and 18c formed on the base 10, the opening and closing of the second ports 18a, 18b, and 18c are controlled one by one in accordance with the movements of the open surface 92 of the drive pad 90 through the rotation of the drive pad 90. Accordingly, the refrigerant flow can be controlled with the control cases 'B', 'C', 'D', and 'E' of FIG.9. That is, the number of control cases for the refrigerant flow can be remarkably reduced when compared with the conventional practice.

According to the first and second embodiments of the present invention, the two to three second ports from which the refrigerant is discharged are formed. However, the number of second ports is not limited thereto, and if three or more refrigerating (freezing) chambers are provided, an electric valve for refrigerant control in the same manner as above can be provided by adjusting the position angles (phase differences) of the second ports.

As set forth in the foregoing, there is provided the electric valve for refrigerant control according to the preferred embodiments of the present invention adopts the drive pad having a shape capable of opening and closing the plurality of outlet ports one by one. Therefore, without any change of the shape of the drive pad, the refrigerant flow for the refrigerating (freezing) chambers partitioned into two or three chambers can be controlled sequentially.

Also, since the drive pad has a shape capable of opening and closing the plurality of outlet ports one by one, the electric valve can be simplified in configuration, and further, since the number of control cases in the control of the refrigerant flow can be greatly reduced, the electric valve can be easily controlled and can have more improved control precision.

Moreover, since the drive pad of the electric valve according to the present invention is applicable in the control of the refrigerant flow for the two or more refrigerating (freezing) chambers, the parts of the electric valve can be shared with those in the refrigerating (freezing) cycle wherein three or more refrigerating (freezing) chambers are provided. Therefore, the whole production cost in manufacturing the product can be lowered, and the assembling process of parts can be reduced.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An electric valve for refrigerant control comprising:
a base;
a cover adapted to cover the base;
a rotor disposed inside the cover and adapted to perform stepping motions in a rotating direction by means of a stator disposed outside the cover; and
a drive pad rotated by receiving a rotating force from the rotor through decelerating gears,
wherein the base has a first port through which a refrigerant is introduced to the space inside the cover and at least two or more second ports through which the refrigerant introduced through the first port is discharged, and the drive pad has a contact surface contacted with the surface of the base and closing the second ports and an open surface stepped from the contact surface and forming a passage extended to the second ports in accordance with the operation of the drive pad.

2. The electric valve for refrigerant control according to claim 1, wherein the second ports are formed around the axial line (center line) of the base coverable by the drive pad, and the first port is formed on the base spaced apart from the drive pad by a predetermined distance.

3. The electric valve for refrigerant control according to claim 2, wherein the second ports are two, and they are formed spaced apart from each other with a predetermined phase difference in a range between 120° and 180° on the axial line of the base.

4. The electric valve for refrigerant control according to claim 2, wherein the second ports are three, and they are spaced apart from each other with a phase difference in a range between 90° and 150° on the axial line of the base.

5. The electric valve for refrigerant control according to claim 1, wherein the open surface of the drive pad has an area adequate to open the second ports one by one as the drive pad is rotated.

6. The electric valve for refrigerant control according to claim 5, wherein the drive pad has a stopper mounted on a predetermined portion of the outer periphery thereof so as to limit the rotational range thereof.

7. The electric valve for refrigerant control according to claim 6, wherein the drive pad is rotated clockwise or counterclockwise by 1.5° per one step by means of the rotor so as to open and close the second ports one by one.
